# FASCICULE DE BREVET EUROPEEN

(11) **EP 4 560 459 B1**
(45) Date de publication et mention de la délivrance du brevet: **29.04.2026**
(21) Numéro de dépôt: 24214139.8
(22) Date de dépôt: 20.11.2024
(51) Int. Cl.: G06F 8/41, G06F 8/77, G06F 9/50, G06F 11/34, G06F 11/3604

(54) **PROCÉDÉ DE SÉLECTION D'UNE ARCHITECTURE MATÉRIELLE POUR LA MISE EN OEUVRE D'UNE APPLICATION LOGICIELLE**
VERFAHREN ZUR AUSWAHL EINER HARDWARE-ARCHITEKTUR ZUR IMPLEMENTIERUNG EINER SOFTWAREANWENDUNG
METHOD FOR SELECTING A HARDWARE ARCHITECTURE FOR IMPLEMENTING A SOFTWARE APPLICATION

(30) Priorité: 23.11.2023 FR 2312912
(43) Date de publication de la demande: 28.05.2025
(73) Titulaire: Centre National d'Études Spatiales, 75039 Paris Cedex 01 (FR)
(72) Inventeur: BRUNO, Mickaël, 31500 Toulouse (FR); COGGIOLA, Clément, 31400 TOULOUSE (FR); MANNI, Florent, 31000 TOULOUSE (FR)
(74) Mandataire: Germain Maureau

(56) Documents cités:
- EP-A1- 2 090 983
- US-A1- 2020 073 677

## Description

### Domaine technique

La présente invention concerne la détermination d'une architecture matérielle adaptée à la mise en œuvre d'une application logicielle.

### Etat de la technique

Les applications logicielles tendent à devenir de plus en plus complexes. En outre, il existe un grand nombre d'architectures matérielles, et notamment un grand nombre de microprocesseurs à simple cœur ou à cœurs multiples, de microcontrôleurs, de circuits logiques programmables tels que FPGA ("Field-Programmable Gate Array"), de systèmes sur puce (SOC - "Systems-On-Chip"), de processeurs graphiques (GPU - "Graphics Processing Unit"), et de moteurs d'intelligence artificielle. Ces architectures matérielles présentent chacune des avantages et des inconvénients. Lorsqu'une application logicielle doit être embarquée, il convient de déterminer l'architecture matérielle la mieux adaptée notamment en termes de vitesse d'exécution, de consommation électrique, et de besoin en ressources de calcul, et également en termes de coût de développement de l'application.

Il est connu de déterminer de manière empirique, c'est-à-dire par expérimentation, l'architecture matérielle adaptée à la mise en œuvre la plus performante d'une application. A cet effet, l'application doit être exécutée sur différentes architectures matérielles cibles pour en évaluer les performances. Cette exécution peut être également simulée. Qu'elle soit simulée ou exécutée directement sur l'architectures cible, l'application doit être portée sur chacune d'entre elles, en prévoyant une adaptation et/ou une optimisation éventuelle préalable pour chaque architecture cible. Cette opération de portage peut nécessiter une réécriture de l'application dans un langage de programmation approprié dépendant de l'architecture cible,

Les demandes de brevet US 2020/073677 A1 et EP 2 090 983 A1 décrivent des solutions impliquant l'exécution de l'application sur chaque architecture cible.

US 2020/073677 A1 propose une méthode et un système permettant de sélectionner dynamiquement le dispositif matériel optimal (par exemple, CPU, GPU, FPGA) pour exécuter un code dans un environnement informatique hybride, en combinant une analyse statique à la compilation et une évaluation dynamique à l'exécution basée sur des modèles de performance et des données d'exécution.

EP 2 090 983 A1 décrit une méthode pour déterminer, dans un environnement multi-architectures, l'architecture la plus adaptée à l'exécution d'une section de code, en générant à la compilation des exécutables pour plusieurs architectures et en choisissant à l'exécution l'architecture optimale selon des informations de coût et de charge.

Cette approche, généralement appelée "analyse dynamique de programme" s'avère fastidieuse et coûteuse, et implique une connaissance détaillée de l'architecture cible et d'un langage de programmation adapté à celle-ci.

Il est donc souhaitable de pouvoir déterminer facilement un type d'architecture matérielle qui soit le mieux adapté à une application logicielle donnée. En particulier, il est souhaitable de pouvoir déterminer un tel type d'architecture matérielle, sans avoir à connaitre une architecture matérielle particulière, ni un langage de programmation particulier. Il peut être également souhaitable de parvenir à ce résultat sans avoir à connaitre ou à déterminer la structure interne de l'application logicielle.

### Résumé

Des modes de réalisation concernent un procédé de détermination d'une architecture matérielle cible pour mettre en œuvre une application logicielle comportant des données d'entrée et des données de sortie, le procédé comprenant des étapes consistant à : définir un premier jeu de valeurs d'entrée attribuant une valeur à chacune des données d'entrée de l'application logicielle ;exécuter l'application logicielle par un processeur à partir du premier jeu de valeurs d'entrée pour obtenir un premier jeu de valeurs de sortie attribuant une valeur à chacune des données de sortie de l'application logicielle ; exécuter plusieurs itérations, chaque itération comprenant des étapes consistant à : sélectionner une donnée d'entrée parmi les données d'entrée de l'application logicielle ; générer un deuxième jeu de valeurs d'entrée à partir du premier jeu de valeurs d'entrée ou d'un deuxième jeu de valeurs d'entrée généré lors d'une itération précédente, en modifiant la valeur de la donnée d'entrée sélectionnée, la donnée sélectionnée étant différente de données d'entrée sélectionnées lors d'itérations précédentes ; exécuter l'application logicielle par le processeur à partir du deuxième jeu de valeurs d'entrée pour obtenir un deuxième jeu de valeurs de sortie ; et calculer par le processeur un résultat de métrique portant sur les premiers jeux de valeurs d'entrée et de sortie et les deuxièmes jeux de valeurs d'entrée et de sortie de l'itération, le résultat de métrique représentant un impact d'une modification du premier jeu de valeurs d'entrée sur le premier jeu de valeurs de sortie, la métrique quantifiant l'étendue de modifications sur des nombres et/ou positions de valeurs modifiées du deuxième jeu de sortie de l'itération par rapport au premier jeu de valeurs de sortie ; calculer par le processeur un score de parallélisation à partir des résultats de métrique calculés à chaque itération, le calcul du score de parallélisation comprenant au moins l'un des calculs suivants : une somme des résultats de métrique, un calcul de moyenne des résultats de métrique, un calcul de variance ou d'écart type appliqué aux résultats de métrique, un calcul de distance euclidienne appliqué aux résultats de métrique, et un calcul de distance de type Manhattan, Minkowski et/ou Tcheychev appliqué aux résultats de métrique ; et déterminer l'architecture matérielle cible en fonction du score de parallélisation, à l'aide d'une table associant des architectures matérielles à des plages de valeurs du score de parallélisation.

De cette manière, une architecture matérielle adaptée à une application logicielle définie peut être déterminée sans avoir à procéder à de multiples essais très coûteux d'exécution de l'application par différentes architectures. Il n'est pas non plus nécessaire d'analyser en détail le code de l'application pour évaluer des possibilités de mise en œuvre d'opérations parallèles, ni de connaitre en détail des architectures cibles. Le procédé peut être mis en œuvre par n'importe quel processeur, dès lors que ce dernier est compatible avec le langage de programmation et/ou le compilateur employé pour générer le code exécutable de l'application.

Selon un mode de réalisation, le nombre d'itérations exécutées correspond à un nombre d'éléments dans les données d'entrée de l'application logicielle, chaque élément étant manipulable individuellement par le processeur.

De cette manière, un grand nombre possibilités d'exécution en parallèle d'opérations de l'application peut être explorées et mises en évidence.

Selon un mode de réalisation, la métrique calculée à l'aide d'une fonction appartient à un ensemble comprenant : une fonction de calcul d'un nombre de valeurs de sortie modifiées dans le deuxième jeu de valeurs de sortie par rapport au premier jeu de valeurs de sortie rapporté à un nombre de valeurs modifiées dans le deuxième jeu de valeurs d'entrée par rapport au premier jeu de valeurs d'entrée, une fonction de localisation d'éléments modifiés dans le deuxième jeu de sortie, une fonction de calcul d'un nombre de données, d'éléments ou de bits modifiés dans le deuxième jeu de valeurs de sortie, et une fonction de calcul de distance, maximum et/ou minimum entre des éléments modifiés dans le deuxième jeu de valeurs de sortie.

Selon un mode de réalisation, l'architecture matérielle cible est sélectionnée parmi des éléments d'un ensemble d'architectures matérielles, une plage de valeurs de score de parallélisation étant attribuée à chaque élément de l'ensemble d'architectures matérielles.

Ainsi, la sélection d'une architecture matérielle en fonction du score de parallélisation se trouve grandement simplifié.

Selon un mode de réalisation, l'ensemble d'architectures matérielles comprend un microprocesseur à simple cœur, un microprocesseur à cœurs multiples, un processeur graphique et un circuit logique programmable.

Selon un mode de réalisation, le procédé comprend outre des étapes consistant à : générer à partir de l'application logicielle, un code exécutable adapté à l'architecture matérielle cible déterminée, et installer le code exécutable dans l'architecture matérielle cible, afin de produire un dispositif réalisant des fonctions offertes par l'application logicielle.

### Brève description des figures

La présente invention sera bien comprise à l'aide de la description qui suit d'exemples de réalisation en référence aux figures annexées, dans lesquelles des signes de références identiques correspondent à des éléments structurellement et/ou fonctionnellement identiques ou similaires.
La figure 1 représente des étapes d'un procédé de détermination d'une architecture matérielle adaptée à la mise en œuvre d'une application logicielle, selon un mode de réalisation,
La figure 2 représente un exemple simplifié d'exécution d'une application logicielle à partir de différents jeux de données d'entrée, illustrant une étape d'évaluation de données de sortie du procédé, selon un mode de réalisation,
La figure 3 représente un exemple simplifié d'exécution d'une autre application logicielle à partir de différents jeux de données d'entrée, illustrant l'étape d'évaluation de données de sortie du procédé, selon un mode de réalisation,
La figure 4 représente un exemple simplifié d'exécution d'une autre application logicielle à partir de différents jeux de données d'entrée, illustrant l'étape d'évaluation de données de sortie du procédé, selon un mode de réalisation.

### Description détaillée

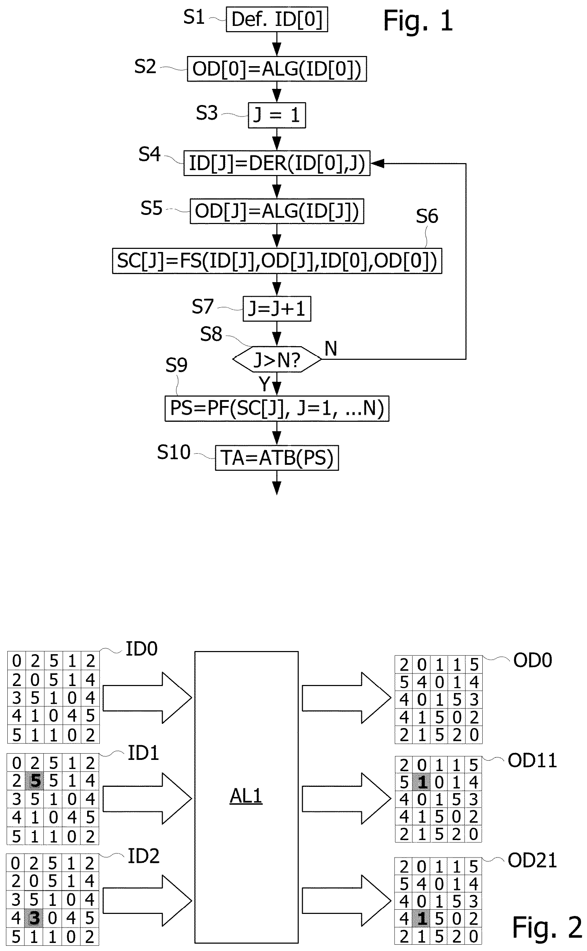

La figure 1 représente des étapes S1 à S10 d'un procédé de détermination d'une architecture matérielle adaptée à la mise en œuvre d'une application logicielle ALG, selon un mode de réalisation. Les étapes S1 à S10 peuvent être exécutées par un processeur apte à exécuter l'application ALG. A l'étape S1, un jeu de valeurs de données d'entrée initial ID[0] est défini pour une application logicielle ALG. Dans ce qui suit, le terme "donnée" désigne un ensemble rassemblant un ou plusieurs éléments manipulables individuellement par le processeur PRC exécutant l'application logicielle. Ainsi chaque élément peut être constitué de un ou plusieurs bits, le nombre minimum de bits formant un élément constituant une caractéristique prédéfinie de l'architecture matérielle à définir. Par exemple, une donnée de type image ou une acquisition de signal est constituée d'éléments (pixels ou échantillons) formés de plusieurs bits.

A l'étape S2, un jeu de valeurs de données de sortie initial OD[0] est calculé en exécutant l'application ALG à partir du jeu de valeurs de données d'entrée ID[0]. L'application ALG est donc disponible sous la forme de code exécutable ou interprétable. A l'étape S3, un index J est initialisé pour une première itération d'exécution des étapes S4 à S8. A l'étape S4, un jeu de valeurs de données d'entrée ID[J] est obtenu à l'aide d'une fonction de dérivation DER appliquée au jeu de valeurs d'entrée ID[0], de sorte que le jeu de valeurs d'entrée ID[J] est différent de tous les jeux de valeurs d'entrée ID[J] précédemment générés durant les exécutions précédentes de l'étape S4. A cet effet, la fonction de dérivation DER peut recevoir l'indice d'itération J. A l'étape S5, le jeu de valeurs d'entrée ID[J] est fourni à l'application ALG pour obtenir un jeu de valeurs de données de sortie correspondant OD[J]. A l'étape S6, une métrique ou un ensemble de métriques SC[J] est calculé pour l'itération J à l'aide d'une ou plusieurs fonctions de calcul de métrique FS appliquées aux jeux de valeurs d'entrée ID[J] et de sortie OD[J] de l'itération J et aux jeux de données initiaux de valeurs d'entrée ID[0] et de sortie OD[0].

A l'étape S7, l'indice J est incrémenté de 1. A l'étape S8, l'indice J est comparé à un nombre maximum d'itérations N à exécuter. Si la dernière itération d'indice N n'est pas exécutée, les étapes S4 à S8 sont à nouveau exécutées, sinon les étapes S9 et S10 sont exécutées. A l'étape S9, un score de parallélisation PS est calculé en appliquant une fonction de calcul d'un tel score aux valeurs de métrique SC[J] obtenues lors des exécutions successives de l'étape S6. A l'étape S10, une architecture matérielle TA est déterminée en fonction du score PS. Selon un mode de réalisation, l'architecture matérielle TA est spécifiée dans une table ATB référençant des architectures matérielles en fonction des valeurs possibles du score PS.

La sélection d'une architecture matérielle en fonction du score PS peut être suivie de la génération d'un code exécutable adapté à l'architecture matérielle sélectionnée et de l'installation de ce code exécutable dans l'architecture matérielle, afin de produire un dispositif réalisant les fonctions offertes par l'application logicielle. La génération d'un code exécutable adapté à l'architecture matérielle sélectionnée peut comprendre la réécriture de l'application logicielle dans un langage approprié, avec éventuellement une réorganisation des opérations de l'application, en particulier dans le cas où l'architecture matérielle sélectionnée est capable d'exécuter des opérations simultanément ou en parallèle.

La fonction de dérivation DER utilisée à l'étape S4 peut utiliser l'indice J reçu pour déterminer une donnée à modifier dans le jeu de valeurs d'entrée initial ID[0] pour générer le jeu de valeurs d'entrée ID[J]. Ainsi, le nombre maximum d'itérations N à exécuter peut correspondre au nombre de données d'entrée de l'application logicielle. Plus généralement, des combinaisons d'altérations possibles du jeu de valeurs d'entrée ID[0] sont déterminées. Le nombre maximum d'itérations N peut alors correspondre au nombre de ces combinaisons d'altération. Ainsi, dans certaines applications, il est possible de déterminer la totalité de ces combinaisons d'altération.

La métrique SC[J] calculée à l'étape S6 peut comprendre une fonction de calcul du nombre de valeurs de sortie modifiées dans le jeu de sortie OD[J] par rapport au jeu de valeurs de sortie initial OD[0] rapporté au nombre de valeurs modifiées dans le jeu d'entrée ID[J] par rapport au jeu de valeurs d'entrée initial ID[0]. Plus simplement, la métrique calculée à l'étape S6 peut fournir un nombre de données, d'éléments ou de bits modifiés dans le jeu de sortie, et/ou une localisation des éléments modifiés dans le jeu de sortie, et/ou une distance, par exemple une distance maximum et/ou minimum entre les éléments modifiés dans le jeu de sortie.

Plus généralement, la métrique calculée à l'étape S6 fournit un nombre représentatif ou une quantification de l'impact ou de l'étendue des modifications sur le jeu de sortie résultant d'une modification du jeu d'entrée, notamment en terme de nombre et de positions des données de sortie modifiées par rapport au jeu de données de sortie initial. Par exemple un résultat de métrique élevé peut traduire une faible modification du jeu de sortie, par exemple un nombre réduit de données modifiées entre le jeu de données de sortie initial et le jeu de données de sortie obtenu à partir du jeu de données d'entrée modifié.

Le score de parallélisation PS calculé à l'étape S9 peut comprendre un calcul de distance entre les valeurs de métrique obtenues à chaque exécution de l'étape S6. Ce calcul de score comprend une somme, et/ou un calcul de moyenne, et/ou un calcul de variance ou d'écart type et/ou un calcul de distance euclidienne, et/ou un calcul de distance de type Manhattan, Minkowski, et/ou Tcheychev.

Le score de parallélisation PS est évalué pour toutes les métriques. Par exemple, un score élevé signifie que l'application logicielle ainsi analysée présente un faible niveau parallélisme, tandis qu'un score faible signifie que l'application logicielle ainsi analysée présente un fort niveau de parallélisme.

Les architectures matérielles cibles peuvent être de type microprocesseur, circuit logique programmable, ou processeur graphique. La table ATB référençant des architectures matérielles en fonction des valeurs possibles du score PS associe une plage de valeurs du score PS à chacun de ces types d'architecture matérielle.

Les figures 2 à 4 illustrent les étapes S2 et nombre maximum d'itérations N à exécuter S5 pour trois types d'applications logicielles AL1, AL2, AL3 exécutées par un processeur PRC. Les figures 2 à 4 présentent en particulier un exemple de jeu de valeurs de données d'entrée initial ID0 et le jeu de valeurs de données de sortie OD0 correspondant obtenu à l'étape S2, et des exemples de jeux de valeurs de données d'entrée ID1, ID2 utilisés respectivement lors de deux exécutions successives de l'étape S5 et des jeux de valeurs de données de sortie OD1, OD2 correspondants. Les jeux de valeurs d'entrée ID1, ID2 diffèrent du jeu de valeurs d'entrée initial ID0 en ce qu'une seule donnée d'entrée est modifiée.

Dans les jeux de valeurs de sortie OD11, OD12 de la figure 2, correspondant aux jeux de valeurs d'entrée ID1, ID2, une seule donnée est modifiée par rapport au jeu de valeurs de sortie initial OD0. La figure 2 illustre donc le cas d'une application AL1 présentant un score de parallélisation faible. Il en résulte que l'architecture matérielle la plus adaptée à l'application AL1 peut être de type circuit logique programmable adapté aux applications logicielles pouvant être fortement parallélisées.

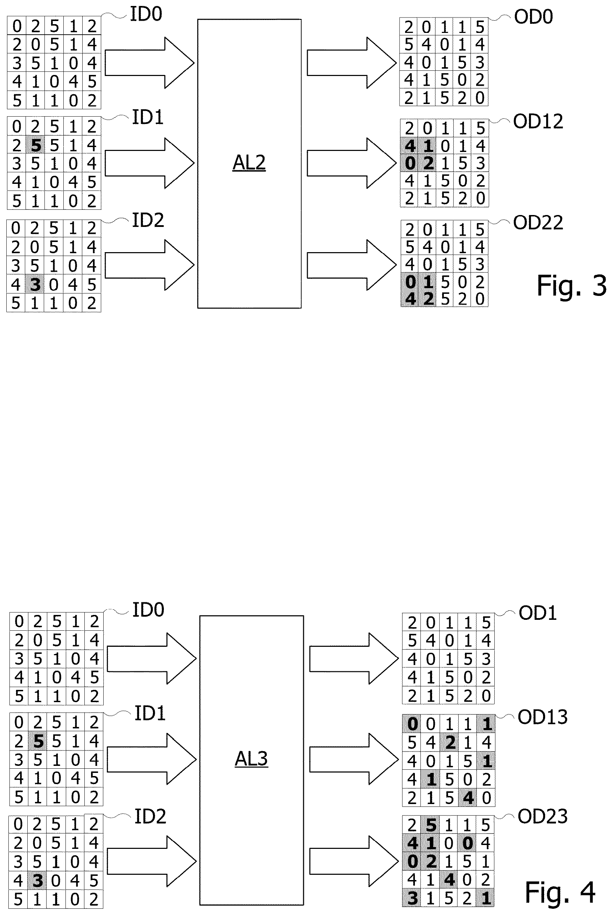

Dans les jeux de valeurs de sortie OD12, OD22 de la figure 3, correspondant aux jeux de valeurs d'entrée ID1, ID2, quatre données sont modifiées par rapport au jeu de valeurs de sortie initial OD0. La figure 3 illustre donc le cas d'une application AL2 présentant un score de parallélisation plus élevé que celui de l'application AL1. Il en résulte que l'architecture matérielle la plus adaptée à l'application AL2 peut être de type processeur graphique.

Dans les jeux de valeurs de sortie OD13, OD23 de la figure 4, correspondant aux jeux de valeurs d'entrée ID1, ID2, six données sont modifiées par rapport au jeu de valeurs de sortie initial OD0. La figure 4 illustre donc le cas d'une application AL3 présentant un score de parallélisation plus élevé que celui de l'application AL2 et qui peut donc être faiblement ou pas du tout parallélisée. Il en résulte que l'architecture matérielle la plus adaptée à l'application AL3 est de type microprocesseur à simple cœur exécutant un programme.

## Revendications

1. Procédé de détermination d'une architecture matérielle cible pour mettre en œuvre une application logicielle comportant des données d'entrée et des données de sortie, le procédé comprenant des étapes consistant à :
définir un premier jeu de valeurs d'entrée (ID[0]) attribuant une valeur à chacune des données d'entrée de l'application logicielle (ALG) ;
exécuter l'application logicielle par un processeur (PRC) à partir du premier jeu de valeurs d'entrée pour obtenir un premier jeu de valeurs de sortie (OD[0]) attribuant une valeur à chacune des données de sortie de l'application logicielle ;
exécuter plusieurs itérations, chaque itération comprenant des étapes consistant à :
sélectionner une donnée d'entrée parmi les données d'entrée de l'application logicielle ;
générer un deuxième jeu de valeurs d'entrée (ID[J]) à partir du premier jeu de valeurs d'entrée ou d'un deuxième jeu de valeurs d'entrée généré lors d'une itération précédente, en modifiant la valeur de la donnée d'entrée sélectionnée, la donnée sélectionnée étant différente de données d'entrée sélectionnées lors d'itérations précédentes ;
exécuter l'application logicielle par le processeur à partir du deuxième jeu de valeurs d'entrée pour obtenir un deuxième jeu de valeurs de sortie (OD[J]) ; et
calculer par le processeur un résultat de métrique (SC[J]) portant sur les premiers jeux de valeurs d'entrée et de sortie et les deuxièmes jeux de valeurs d'entrée et de sortie de l'itération, le résultat de métrique représentant un impact d'une modification du premier jeu de valeurs d'entrée sur le premier jeu de valeurs de sortie, la métrique quantifiant l'étendue de modifications sur des nombres et/ou positions de valeurs modifiées du deuxième jeu de sortie de l'itération par rapport au premier jeu de valeurs de sortie ;
calculer par le processeur un score de parallélisation (PS) à partir des résultats de métrique calculés à chaque itération, le calcul du score de parallélisation comprenant au moins l'un des calculs suivants :
une somme des résultats de métrique (SC[J]),
un calcul de moyenne des résultats de métrique,
un calcul de variance ou d'écart type appliqué aux résultats de métrique,
un calcul de distance euclidienne appliqué aux résultats de métrique, et
un calcul de distance de type Manhattan, Minkowski et/ou Tcheychev appliqué aux résultats de métrique ; et
déterminer l'architecture matérielle cible en fonction du score de parallélisation, à l'aide d'une table (ATB) associant des architectures matérielles à des plages de valeurs du score de parallélisation.

2. Procédé selon la revendication 1, dans lequel le nombre (N) d'itérations exécutées correspond à un nombre d'éléments dans les données d'entrée de l'application logicielle (ALG), chaque élément étant manipulable individuellement par le processeur (PRC).

3. Procédé selon la revendication 1 ou 2, dans lequel la métrique (SC[J]) calculée à l'aide d'une fonction appartient à un ensemble comprenant :
une fonction de calcul d'un nombre de valeurs de sortie modifiées dans le deuxième jeu de valeurs de sortie (OD[J]) par rapport au premier jeu de valeurs de sortie (OD[0]) rapporté à un nombre de valeurs modifiées dans le deuxième jeu de valeurs d'entrée (ID[J]) par rapport au premier jeu de valeurs d'entrée (ID[0]),
une fonction de localisation d'éléments modifiés dans le deuxième jeu de sortie,
une fonction de calcul d'un nombre de données, d'éléments ou de bits modifiés dans le deuxième jeu de valeurs de sortie, et
une fonction de calcul de distance, maximum et/ou minimum entre des éléments modifiés dans le deuxième jeu de valeurs de sortie.

4. Procédé selon l'une des revendications 1 à 3, dans lequel l'architecture matérielle cible est sélectionnée parmi des éléments d'un ensemble d'architectures matérielles, une plage de valeurs de score de parallélisation (PS) étant attribuée à chaque élément de l'ensemble d'architectures matérielles.

5. Procédé selon la revendication 4, dans lequel l'ensemble d'architectures matérielles comprend un microprocesseur à simple cœur, un microprocesseur à cœurs multiples, un processeur graphique et un circuit logique programmable.

6. Procédé selon l'une des revendications 1 à 5, comprenant en outre des étapes consistant à :
générer à partir de l'application logicielle, un code exécutable adapté à l'architecture matérielle cible déterminée, et
installer le code exécutable dans l'architecture matérielle cible, afin de produire un dispositif réalisant des fonctions offertes par l'application logicielle.

## Patentansprüche

1. Verfahren zum Bestimmen einer Ziel-Hardwarearchitektur zum Bereitstellen einer Softwareanwendung, die Eingangsdaten und Ausgangsdaten aufweist, wobei das Verfahren Schritte umfasst, die aus Folgendem bestehen:
Definieren eines ersten Eingangswertsatzes (ID[0]), der jedem der Eingangsdaten der Softwareanwendung (ALG) einen Wert zuweist;
Ausführen der Softwareanwendung durch einen Prozessor (PRC) aus dem ersten Eingangswertsatz, um einen ersten Ausgangswertsatz (OD[0]) zu erhalten, der jedem der Ausgangsdaten der Softwareanwendung einen Wert zuweist;
Ausführen mehrerer Iterationen, wobei jede Iteration Schritte umfasst, die aus Folgendem bestehen:
Auswählen einer der Eingangsdaten aus den Eingangsdaten der Softwareanwendung;
Erzeugen eines zweiten Eingangswertsatzes (ID[J]) aus dem ersten Eingangswertsatz oder eines zweiten Eingangswertsatzes, der während einer vorherigen Iteration erzeugt wurde, durch Ändern des Werts der ausgewählten Eingangsdaten, wobei die ausgewählten Daten sich von den in vorherigen Iterationen ausgewählten Eingangsdaten unterscheiden;
Ausführen der Softwareanwendung durch den Prozessor aus dem zweiten Eingangswertsatz, um einen zweiten Ausgangswertsatz (OD[J]) zu erhalten; und
Berechnen eines Metrikergebnisses (SC[J]) durch den Prozessor, das sich auf die ersten Eingangs- und Ausgangswertsätze und die zweiten Eingangs- und Ausgangswertsätze der Iteration bezieht, wobei das Metrikergebnis eine Auswirkung einer Änderung des ersten Eingangswertsatzes auf den ersten Ausgangswertsatz darstellt, wobei die Metrik den Änderungsumfang an geänderten Zahlen und/oder Wertpositionen des zweiten Ausgangssatzes der Iteration in dem Vergleich zu dem ersten Ausgangswertsatz quantifiziert;
Berechnen eines Parallelisierungswerts (PS) durch den Prozessor aus den bei jeder Iteration berechneten Metrikergebnissen, wobei das Berechnen des Parallelisierungswerts mindestens eine der folgenden Berechnungen umfasst:
eine Summe der Ergebnisse der Metrik (SC[J]),
eine Berechnung des Durchschnitts der Metrikergebnisse,
eine Berechnung der Varianz oder Standardabweichung, die auf die Ergebnisse der Metrik angewendet wird,
eine Berechnung der Euklidischen Distanz, die auf die Ergebnisse der Metrik angewendet wird, und
eine Berechnung der Distanz des Typs Manhattan, Minkowski und/oder Tcheychev, die auf die Ergebnisse der Metrik angewendet wird; und
Bestimmen der Ziel-Hardwarearchitektur anhand des Parallelisierungswerts mithilfe einer Tabelle (ATB), die Hardware-Architekturen mit Wertbereichen des Parallelisierungswerts verknüpft.

2. Verfahren nach Anspruch 1, wobei die Anzahl (N) der ausgeführten Iterationen einer Anzahl von Elementen in den Eingangsdaten der Softwareanwendung (ALG) entspricht, wobei jedes Element einzeln von dem Prozessor (PRC) manipulierbar ist.

3. Verfahren nach Anspruch 1 oder 2, wobei die mithilfe einer Funktion berechnete Metrik (SC[J] zu einer Reihe gehört, die Folgendes umfasst:
eine Funktion zu dem Berechnen einer Anzahl von Ausgangswerten, die in dem zweiten Ausgangswertsatz (OD[J]) in Bezug auf den ersten Ausgangswertsatz (OD[0]) in Bezug auf eine Anzahl von Werten, die in dem zweiten Eingangswertsatz (ID[J]) in Bezug auf den ersten Eingangswertsatz (ID[0]) geändert wurden,
eine Funktion zu dem Lokalisieren von Elementen, die in dem zweiten Ausgangssatz geändert wurden,
eine Funktion zum Berechnen einer Anzahl von geänderten Daten, Elementen oder Bits in dem zweiten Ausgangswertsatz, und
eine Funktion zum Berechnen des Abstands, des Maximums und/oder des Minimums zwischen Elementen, die in dem zweiten Ausgangswertsatz geändert wurden.

4. Verfahren nach einem der Ansprüche 1 bis 3, wobei die Ziel-Hardwarearchitektur aus Elementen einer Reihe von Hardwarearchitekturen ausgewählt wird, wobei jedem Element der Reihe von Hardwarearchitekturen ein Bereich von Parallelisierungswerten (PS) zugewiesen wird.

5. Verfahren nach Anspruch 4, wobei die Reihe von Hardwarearchitekturen einen Einzelkern-Mikroprozessor, einen Mehrkern-Mikroprozessor, einen Grafikprozessor und eine programmierbare Logikschaltung umfasst.

6. Verfahren nach einem der Ansprüche 1 bis 5, das ferner die Schritte umfasst, die aus Folgendem bestehen:
Erzeugen eines ausführbaren Codes aus der Softwareanwendung, der an die bestimmte Ziel-Hardwarearchitektur angepasst ist, und
Installieren des ausführbaren Codes in der Ziel-Hardwarearchitektur, um eine Vorrichtung herzustellen, die die von der Softwareanwendung angebotenen Funktionen durchführt.

## Claims

1. A method for determining a target hardware architecture for implementing a software application including input data and output data, the method comprising steps of:
defining a first set of input values (ID[0]) assigning a value to each item of the input data of the software application (ALG);
executing the software application by a processor (PRC) using the first set of input values to obtain a first set of output values (OD[0]) assigning a value to each item of the output data of the software application;
executing a plurality of iterations, each iteration comprising steps of:
selecting an item from among the input data of the software application;
generating a second set of input values (ID[J]) from the first set of input values or from a second set of input values generated during a previous iteration, by modifying the value of the selected item, the selected item being different from items selected during previous iterations;
executing the software application by the processor using the second set of input values to obtain a second set of output values (OD[J]); and
calculating, by the processor, a metric result (SC[J]) relating to the first sets of input and output values and the second sets of input and output values of the iteration, the metric result representing an impact of a modification of the first set of input values on the first set of output values, the metric quantifying the extent of modifications in number and/or in position of modified values of the second set of output values of the iteration relative to the first set of output values;
calculating, by the processor, a parallelization score (PS) from the metric results calculated at each iteration, the calculation of the parallelization score comprising at least one of the following calculations:
a summation of the metric results (SC[J]),
an average calculation of the metric results,
a variance or standard deviation calculation applied to the metric results,
a Euclidean distance calculation applied to the metric results, and
a Manhattan, Minkowski, and/or Chebyshev distance calculation applied to the metric results; and
determining the target hardware architecture as a function of the parallelization score, using a table (ATB) associating hardware architectures with ranges of parallelization score values.

2. The method according to claim 1, wherein the number (N) of iterations performed corresponds to a number of elements in the input data of the software application (ALG), each element being individually manipulable by the processor (PRC).

3. The method according to claim 1 or 2, wherein the metric (SC[J]) calculated using a function belongs to a set comprising:
a function for calculating a number of modified output values in the second set of output values (OD[J]) relative to the first set of output values (OD[0]) expressed with respect to the number of modified values in the second set of input values (ID[J]) relative to the first set of input values (ID[0]),
a function for locating modified elements in the second set of output values,
a function for calculating the number of modified data, elements, or bits in the second set of output values, and
a function for calculating a maximum and/or minimum distance between modified elements in the second set of output values.

4. The method according to any of claims 1 to 3, wherein the target hardware architecture is selected from elements of a set of hardware architectures, a range of parallelization score (PS) values being assigned to each element of the set of hardware architectures.

5. The method according to claim 4, wherein the set of hardware architectures comprises a single-core microprocessor, a multi-core microprocessor, a graphics processor, and a programmable logic circuit.

6. The method according to any of claims 1 to 5, further comprising steps of:
generating, from the software application, executable code adapted to the determined target hardware architecture, and
installing the executable code in the target hardware architecture to produce a device performing functions provided by the software application.
